# EUROPEAN PATENT APPLICATION

(11) **EP 4 800 497 A1**
(43) Date of publication of application: **02.09.2026**
(21) Application number: 24881591.2
(22) Date of filing: 22.10.2024
(51) Int. Cl.: G05B 19/418

(54) **PROCESS SET RECOMMENDATION METHOD BASED ON COMPREHENSIVE ERROR DETERMINATION AND RELATED DEVICE THEREOF**

(30) Priority: 27.10.2023 CN 202311433231
(71) Applicant: Intelligent Grinding Technology (Shenzhen) Co., Ltd., Shenzhen, Guangdong 518000 (CN)
(72) Inventor: HUANG, Jie, Shenzhen, Guangdong 518000 (CN); XIE, Zhikun, Shenzhen, Guangdong 518000 (CN); WANG, Jinsheng, Shenzhen, Guangdong 518000 (CN); BI, Xuefeng, Shenzhen, Guangdong 518000 (CN)
(74) Representative: Cabinet Chaillot
(86) International application number: PCT/CN2024/126393
(87) International publication number: WO 2025/087226

(57) **Abstract**

This application provides a method for recommending process set based on comprehensive error evaluation and related device. The method includes: acquiring first information of a workpiece to be machined and generating a first process set based on the first information, wherein the first information includes machining target information, workpiece characteristic information, placement position information and cutting tool information of the workpiece to be machined; obtaining a comprehensive error evaluation result by sequentially performing comprehensive error evaluation on the workpiece to be machined according to the first information, wherein the comprehensive error evaluation sequentially includes at least two of geometric error evaluation, force error evaluation and thermal error evaluation; determining whether to apply the first process set to machine the workpiece to be machined according to the comprehensive error evaluation result.

## Description

### FIELD

The present application relates to the field of intelligent manufacturing, and in particular to a method for recommending a process set based on comprehensive error evaluation and related devices.

### BACKGROUND

In the prior art, because the CAM-based process design flow relies excessively on manual experience, when the manual experience is insufficient, low processing efficiency and poor economic benefits often occur, for example, changing the operator may result in different processing quality of the same product. When the operator is not familiar with the current processing equipment, the operator needs to perform sample trial cutting evaluation. Moreover, even when the operator is familiar with the processing equipment, the problem of processing scrap may be caused by ignoring certain factors.

Furthermore, in the process of studying the prior art, the applicant found that the existing error model of computer numerical control machine tools is established based on a single error source, and the workpiece often cannot meet expected requirements after subsequent processing operations based on this error model.

### SUMMARY

The present application provides a method for recommending a process set based on comprehensive error evaluation and related devices, which are used to improve the quality of error evaluation and to realize process set recommendation.

A first aspect of the present application provides a method for recommending a process set based on comprehensive error evaluation, which includes: acquiring first information of a workpiece to be machined and generating a first process set based on the first information, wherein the first information includes machining target information, workpiece characteristic information, placement position information and cutting tool information of the workpiece to be machined; obtaining a comprehensive error evaluation result by sequentially performing comprehensive error evaluation on the workpiece to be machined according to the first information, wherein the comprehensive error evaluation sequentially includes at least two of geometric error evaluation, force error evaluation and thermal error evaluation; determining whether to apply the first process set to machine the workpiece to be machined according to the comprehensive error evaluation result.

A second aspect of the present application provides a device for recommending a process set based on comprehensive error evaluation, which includes: an acquisition module configured to acquire first information of a workpiece to be machined and generating a first process set based on the first information, wherein the first information includes machining target information, workpiece characteristic information, placement position information and cutting tool information of the workpiece to be machined; a determination module configured to obtain a comprehensive error evaluation result by sequentially performing comprehensive error evaluation on the workpiece to be machined according to the first information, wherein the comprehensive error evaluation sequentially includes at least two of geometric error evaluation, force error evaluation and thermal error evaluation; the determination module is further configured to determine whether to apply the first process set to machine the workpiece to be machined according to the comprehensive error evaluation result.

A third aspect of the present application provides a cloud device, the cloud device comprises: a storage device, a processor and a bus system; wherein the storage device is configured to store a program; the processor is configured to execute the program in the storage device, the program includes executing the method of the first aspect of the present application; the bus system is configured to connect the storage device and the processor to enable communication between the storage device and the processor.

A fourth aspect of the present application provides a computer-readable storage medium containing instructions, when the instructions are performed on a computer, the computer is caused to execute the method of the first aspect of the present application.

A fifth aspect of the present application provides an electronic device, the electronic device includes: an acquisition module configured to acquire first information of a workpiece to be machined and generating a first process set based on the first information, wherein the first information includes machining target information, workpiece characteristic information, placement position information and cutting tool information of the workpiece to be machined; a determination module configured to obtain a comprehensive error evaluation result by sequentially performing comprehensive error evaluation on the workpiece to be machined according to the first information, wherein the comprehensive error evaluation sequentially includes at least two of geometric error evaluation, force error evaluation and thermal error evaluation; the determination module is further configured to determine whether to apply the first process set to machine the workpiece to be machined according to the comprehensive error evaluation result.

A sixth aspect of the present application provides an electronic device, a storage device, a processor and a computer program stored in the storage device and executable on the processor, wherein the processor implements the method for recommending a process set based on comprehensive error evaluation according to any embodiment of the present application when executing the computer program.

A seventh aspect of the present application provides a computer program product, the computer program product comprises a computer program, which is executable by a processor to implement a method for recommending process set based on comprehensive error evaluation according to any embodiment of the present application.

Compared with the prior art, the technical solution of the present application acquires the first information of the workpiece to be machined and generates the first process set based on the first information, then sequentially performs comprehensive error evaluation on the workpiece to be machined according to the first information to obtain a comprehensive error evaluation result. Since the comprehensive error evaluation includes at least two of geometric error evaluation, force error evaluation and thermal error evaluation, the single error evaluation on the workpiece to be machined is changed to comprehensive error evaluation compared with the prior art, thereby obtaining a comprehensive error evaluation result, improving the quality of error evaluation, and avoiding the problem of inadequate processing caused by a single error source in subsequent processing operations. Finally, it is determined whether to apply the first process set to process the workpiece to be machined according to the comprehensive error evaluation result, which avoids the problem of low labor efficiency caused by reliance on manual experience and realizes automatic recommendation of the process set.

### BRIEF DESCRIPTION OF THE DRAWINGS

In order to explain the technical solutions in the embodiments of the present application more clearly, the accompanying drawings required in the description of the embodiments are briefly introduced below. Obviously, the accompanying drawings in the following description are only some embodiments of the present application, and those of ordinary skill in the art can obtain other drawings according to these drawings without any creative work.
FIG. 1 is a flow diagram of a method for recommending a process set based on comprehensive error evaluation according to an embodiment of the present application;
FIG. 2 is a system architecture diagram of an industrial internet scenario according to an embodiment of the present application;
FIG. 3 is another schematic flow diagram of the method according to an embodiment of the present application;
FIG. 4 is a flow diagram of the sequential execution of comprehensive error evaluation according to an embodiment of the present application;
FIG. 5 is a further flow diagram of step 402 in FIG.4 according to an embodiment of the present application;
FIG. 6 is a further flow diagram of step 502 in FIG.5 according to an embodiment of the present application;
FIG. 7 is a structural schematic diagram of a device for recommending a process set based on comprehensive error evaluation according to an embodiment of the present application;
FIG. 8 is a schematic diagram of a cloud device according to an embodiment of the present application;
FIG. 9 is a block diagram of an application environment according to an embodiment of the present application.

### DESCRIPTION OF THE EMBODIMENTS

The solutions of the embodiments of the present application are described in detail below with reference to the accompanying drawings of the specification.

In the following description, for the purpose of explanation rather than limitation, specific details such as specific system structures, interfaces, and technologies are proposed to facilitate a thorough understanding of the present application.

The technical solutions in the embodiments of the present application are clearly and completely described below in conjunction with the accompanying drawings in the embodiments of the present application. Obviously, the described embodiments are only a part of the embodiments of the present application, not all of them. All other embodiments obtained by those of ordinary skill in the art based on the embodiments in the present application without creative work shall fall within the protection scope of the present application.

The terms "first", "second" and "third" in the present application are only used for descriptive purposes, and cannot be understood as indicating or implying relative importance or implicitly indicating the number of indicated technical features. Thus, features defined with "first", "second" and "third" may explicitly or implicitly include at least one of the features. In the description of the present application, the meaning of "a plurality of" is at least two, such as two, three, etc., unless otherwise clearly and specifically defined. All directional indications (such as up, down, left, right, front, back, ...) in the embodiments of the present application are only used to explain the relative positional relationship, movement state, etc., between various components under a specific posture (as shown in the accompanying drawings). If the specific posture changes, the directional indication is also changed accordingly. In addition, the terms "include" and "have" and any variations thereof are intended to cover non-exclusive inclusion. For example, a process, method, system, product or device that includes a series of steps or units is not limited to the listed steps or units, but optionally also includes unlisted steps or units, or optionally also includes other steps or units inherent to these processes, methods, products or devices.

Reference to "embodiment" herein means that a specific feature, structure, or characteristic described in connection with the embodiment may be included in at least one embodiment of the present application. The embodiment mentioned in various places in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the prior art, machining a workpiece to be machined by a computer numerical control (CNC) machine tool requires operations of an operator, and relies on the manual experience of the operator to machine the workpiece to be machined to obtain an expected workpiece shape. The manual experience of the operator includes not only their own processing skills but also the proficiency in using the CNC machine tool. Specifically, when a same operator machines a same workpiece on a familiar CNC machine tool versus an unfamiliar CNC machine tool to obtain a same workpiece machining result, machining failures tend to occur when the operator uses the unfamiliar CNC machine tool. Therefore, the operator needs to perform sample trial cutting to become as familiar as possible with the operation of the new CNC machine tool to complete the established task.

Moreover, in the actual machining process, the existing CNC machine tools machine the workpiece based on a single error source model, and the workpiece cannot meet the expected quality requirements after being machined in this way.

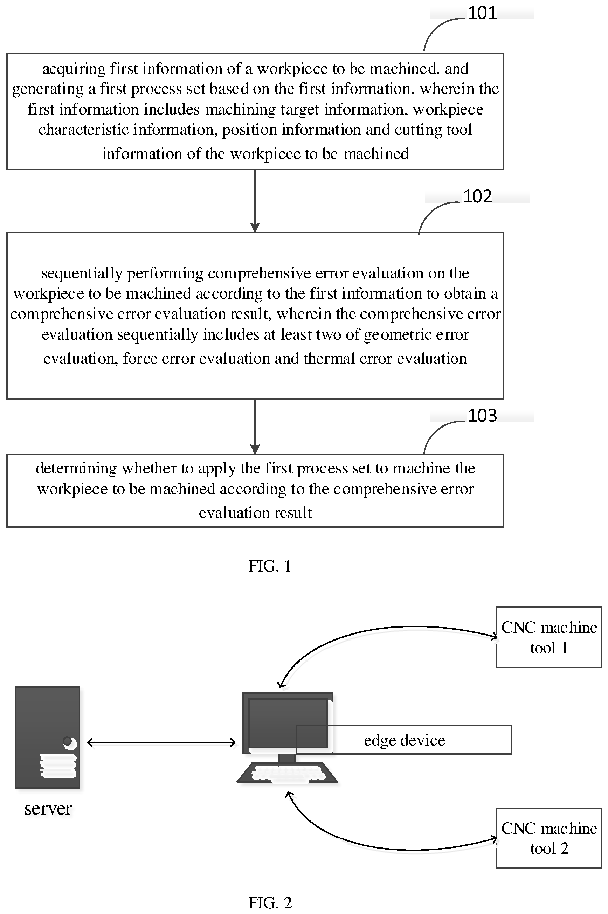

FIG. 1 illustrates a method for recommending a process set based on comprehensive error evaluation, which can be applied to the following industrial internet scenario.

Referring to FIG. 2, in a possible system architecture for an industrial internet scenario, the system includes an electronic device, an edge device, and a plurality of CNC machine tools. The electronic device may communicate directly with the CNC machine tools, or the electronic device may communicate indirectly with the CNC machine tools via the edge device. The electronic device includes, but is not limited to, an industrial computer, a numerical control device, a tablet computer, a wearable device, an augmented reality (AR)/virtual reality (VR) device, a laptop computer, an ultra-mobile personal computer (UMPC), a netbook, and a server. The embodiments of the present application impose no limitation on the specific types of the electronic devices. For example, as shown in FIG. 2, the electronic device is a server. In addition, the electronic device may be an industrial cloud platform, a physical server, or an apparatus based on a physical server. The industrial cloud platform may be a public cloud platform or an enterprise private cloud platform. The physical server may be implemented as a single physical server or constructed by multiple servers to form a server cluster. The edge device is configured to collect information and acts as an intermediary for transferring communications between the server and the CNC machine tools. A single edge device may correspond to multiple CNC machine tools, or alternatively multiple edge devices are in one-to-one correspondence with their respective CNC machine tools.

The execution entity of the method for recommending a process set of the present application may directly implement the follow embodiments through a CNC machine tool. Alternatively, the following embodiments may be implemented by the electronic device after an edge computer collects first information of a workpiece to be machined and sends the first information to the electronic device, which is not specifically limited herein.

The method for recommending a process set of the present application is now described in combination with the above architecture. It should be understood that the embodiments described herein are merely illustrative rather than limiting.

The method for recommending a process set of the present application includes the following steps:

101, acquiring first information of a workpiece to be machined, and generating a first process set based on the first information, wherein the first information includes machining target information, workpiece characteristic information, position information and cutting tool information of the workpiece to be machined.

After the workpiece to be machined is determined, the edge device acquires the first information of the workpiece to be machined and uploads the first information to the electronic device. The electronic device generates the first process set for machining the workpiece to be machined based on the acquired first information of the workpiece to be machined. Based on the first information, the electronic device sequentially performs comprehensive error evaluation to obtain a comprehensive error evaluation result, and then determines whether to apply the generated first process set to machine the workpiece to be machined.

In some embodiments, the first information can be manually input by using the edge device and then can be uploaded to the electronic device, or can be acquired by scanning a process sheet of the workpiece to be machined with an expansion device of the edge device (such as a barcode scanner), or can be obtained by the edge device searching from historical records, which is not specifically limited herein.

Specifically, the first information includes the machining target information, the workpiece characteristic information, the position information and the cutting tool information of the workpiece to be machined.

The machining target information refers to process parameters of the workpiece to be machined for achieving expected workpiece quality, such as, a length, width, angle, surface roughness, diameter, slenderness ratio, aspect ratio, and depth-to-diameter ratio of each part of an expected workpiece shape.

The workpiece characteristic information refers to inherent material properties of the workpiece to be machined, such as stiffness, hardness, thermal expansion coefficient, etc., and contour information, such as the length, width, angle, diameter, slenderness ratio, aspect ratio, depth-to-diameter ratio of the workpiece to be machined before machining
The position information includes position parameters of the workpiece to be machined. Specifically, since the workpiece to be machined is placed on a worktable, the position information depends on the position of the worktable.

The cutting tool information includes material property information and position parameters of the cutting tool used for machining the workpiece to be machined.

The process set is a collection of process operations determined for machining a workpiece to be machined into the expected workpiece shape, and is automatically generated by a process system of the electronic device based on the acquired information of the workpiece to be machined. The electronic device includes a variety of process sets which are pre-stored in the process system. A highly similar one of the process sets is automatically matched after the workpiece information is acquired. For example, when a borehole needs to be made on the workpiece to be machined, the process system can recommend relevant processes according to the target information of the borehole to be machined and the hardness and stiffness information of the material to be machined.

Thus, the recommended process set can be generated based on the information of the workpiece to be machined, thereby solving the problem of relying on manual experience.

102, sequentially performing comprehensive error evaluation on the workpiece to be machined according to the first information to obtain a comprehensive error evaluation result, wherein the comprehensive error evaluation sequentially includes at least two of geometric error evaluation, force error evaluation and thermal error evaluation.

The edge device sends the first information to the electronic device, and the electronic device sequentially performs comprehensive error evaluation on the workpiece to be machined according to the acquired first information. Specifically, if the comprehensive error evaluation includes the geometric error evaluation and the force error evaluation, then the geometric error evaluation and the force error evaluation are performed on the workpiece to be machined in sequence; if the comprehensive error evaluation includes the geometric error evaluation, the force error evaluation and the thermal error evaluation, then the geometric error evaluation, the force error evaluation and the thermal error evaluation are performed on the workpiece to be machined in sequence. Therefore, the comprehensive error evaluation sequentially includes at least two of the geometric error evaluation, the force error evaluation and the thermal error evaluation, which are performed in sequence to thereby obtain the comprehensive error evaluation result.

It should be noted that the comprehensive error evaluation result matches the specific content of the comprehensive error evaluation.

It should be noted that the sequential execution of the comprehensive error evaluation on the workpiece to be machined according to the first information and the generation of the first process set based on the first information can be performed simultaneously. Alternatively, the sequential execution of the comprehensive error evaluation on the workpiece to be machined according to the first information can be performed subsequent to the generation of the first process set based on the first information, or the sequential execution of the comprehensive error evaluation on the workpiece to be machined according to the first information can be performed prior to the generation of the first process set based on the first information performed subsequently, which is not specifically limited herein.

103. determining whether to apply the first process set to machine the workpiece to be machined according to the comprehensive error evaluation result.

After obtaining the comprehensive error evaluation result, the electronic device determines whether to apply the first process set to machine the workpiece to be machined according to the comprehensive error evaluation result. That is, according to the comprehensive determination result, the electronic device verifies whether the process set generated by the digital twin system based on the information of the workpiece to be machined is reasonable, thereby alleviating the problem of incorrect process set generation by the digital twin system. The above mentioned process system is the digital twin system. The method for recommending a process set based on comprehensive error evaluation is applied in the digital twin system.

In some embodiments, to improve the efficiency and quality of subsequent machining and provide a reference for learning, on the basis of the above embodiment, the method further includes, after the electronic device determines a target process set to be applied to the workpiece to be machined, recording the target process set and the first information of the workpiece to be machined to form empirical data. By recording the target process set and the first information used for machining the workpiece to be machined, operators can refer to the empirical data when machining the same or similar workpieces to be machined subsequently, which reduces the probability of machining errors and improves the cost-effectiveness of machining.

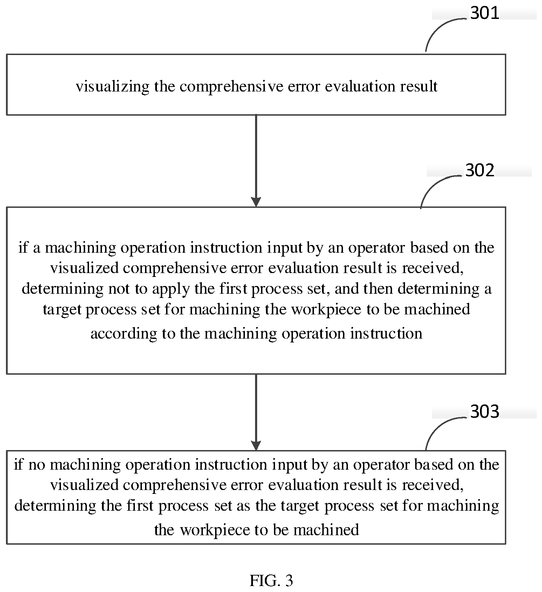

Please refer to FIG. 3, which depicts that after the digital twin system determines the comprehensive error evaluation result, the target process set for machining the workpiece to be machined is determined with or without the intervention of an operator based on the comprehensive error evaluation result. By providing a human-machine collaborative operation mode that allows operator intervention, the target process set finally determined by the digital twin system can be more complete and accurate. The process of FIG. 3 includes the following steps:
301, visualizing the comprehensive error evaluation result.

After determining the comprehensive error evaluation result, the electronic device sends the comprehensive error evaluation result to a display device to visualize the comprehensive error evaluation result. The display device is an edge device equipped with a display module; the edge device can be a non-mobile edge device or a mobile edge device, which is not specifically limited herein. The mobile edge device can be a mobile phone, a tablet computer, a portable laptop and the like, which is not specifically limited herein.

302, if a machining operation instruction input by an operator based on the visualized comprehensive error evaluation result is received, determining not to apply the first process set, and then determining a target process set for machining the workpiece to be machined according to the machining operation instruction.

If the electronic device receives a machining operation instruction, which is input by an operator according to the visualized comprehensive error evaluation result displayed on the display device for the first information of the workpiece to be machined, the target process set for machining the workpiece to be machined is re-determined according to the machining operation instruction, and the first process set is no longer applied.

The machining operation instruction is an input instruction for an operator to adjust the first information and/or the first process set based on the visualized comprehensive error evaluation result. The adjustment of the first information refers to the adjustment of the position information and/or the cutting tool information, and the adjustment of the first process set refers to the adjustment of the collection of processing operations generated by the digital twin system.

The input device for entering the machining operation instruction can be an input device of the edge device, which is the same edge device as referred to in step 301.

303, if no machining operation instruction input by an operator based on the visualized comprehensive error evaluation result is received, determining the first process set as the target process set for machining the workpiece to be machined.

If the electronic device does not receive the machining operation instruction input by an operator for the first information of the workpiece to be machined based on the visualized comprehensive error evaluation displayed on the display device, the first process set is determined as the target process set for machining the workpiece to be machined.

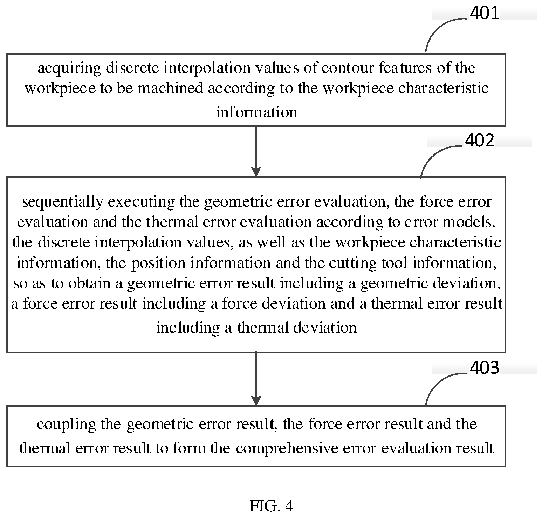

Please refer to FIG. 4, which depicts the sequential execution of comprehensive error evaluation in the case where the comprehensive error evaluation includes the geometric error evaluation, the force error evaluation and the thermal error evaluation, including the following steps:
401, acquiring discrete interpolation values of contour features of the workpiece to be machined according to the workpiece characteristic information.

The electronic device determines an original contour of the workpiece to be machined before machining according to the workpiece characteristic information of the workpiece to be machined, determines the contour features based on the original contour, and then obtains the discrete interpolation values based on the contour features.

402, sequentially executing the geometric error evaluation, the force error evaluation and the thermal error evaluation according to error models, the discrete interpolation values, as well as the workpiece characteristic information, the position information and the cutting tool information, so as to obtain a geometric error result including a geometric deviation, a force error result including a force deviation and a thermal error result including a thermal deviation.

The electronic device is configured with the error models including a geometric error model, a force error model and a thermal error model. Each type of error model corresponds to its respective error evaluation, thereby generating its respective error result, wherein the force error model includes a cutting tool force error model and a workpiece force error model. Thus, according to the error models, the discrete interpolation values, as well as the workpiece characteristic information, the position information and the cutting tool information, the digital twin system sequentially executes the geometric error evaluation, the force error evaluation and the thermal error evaluation corresponding to the respective error models, so as to obtain the geometric error result including the geometric deviation, the force error result including the force deviation and the thermal error result including the thermal deviation.

The geometric deviation is used to determine the error magnitude of the workpiece to be machined at a predetermined position, so as to determine an optimal machining position; the force deviation is used to determine the deformation error magnitude of the workpiece to be machined under the action of a cutting tool force, so as to determine an optimal machining force; the thermal deviation is used to determine the deformation error magnitude of the thermal deformation of the CNC machine tool under current machining conditions, so as to determine a corresponding thermal compensation strategy.

403, coupling the geometric error result, the force error result and the thermal error result to form the comprehensive error evaluation result.

After obtaining the geometric error result including the geometric deviation, the force error result including the force deviation and the thermal error result including the thermal deviation, the electronic device couples the geometric error result, the force error result and the thermal error result to obtain the coupled comprehensive error evaluation result.

In some embodiments, the coupling method involves superposing the geometric deviation of the geometric error result, the force deviation of the force error result and the thermal deviation of the thermal error result to obtain a comprehensive deviation, so as to obtain the comprehensive error evaluation result including the comprehensive deviation. The superposition method can be linear superposition or nonlinear superposition, and the comprehensive error evaluation result can further include the geometric deviation, the force deviation and the thermal deviation.

Specifically, the geometric deviation, the force deviation and the thermal deviation can be respectively multiplied by corresponding coefficients and then linearly superposed.

It should be noted that the comprehensive error evaluation can involve the sequential execution of the geometric error evaluation and the force error evaluation, without executing the thermal error evaluation, and the corresponding comprehensive error evaluation result includes a comprehensive deviation obtained by coupling the geometric deviation and the force deviation, and can further include the geometric deviation and the force deviation.

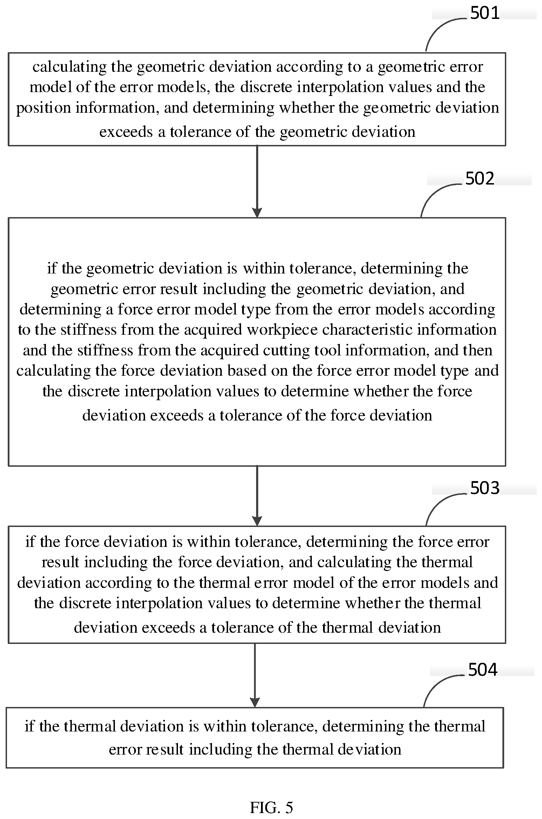

Please refer to FIG. 5, which further depicts step 402 of the sequential execution of comprehensive error evaluation, including the following steps:
501, calculating the geometric deviation according to a geometric error model of the error models, the discrete interpolation values and the position information, and determining whether the geometric deviation exceeds a tolerance of the geometric deviation.

The electronic device first inputs the discrete interpolation values and the position parameters of the workpiece to be machined in the position information into the geometric error model of the error models, obtains the geometric deviation corresponding to the discrete interpolation values calculated by the geometric error model, and determines whether the geometric deviation exceeds the tolerance of the geometric deviation by determining whether the geometric deviation is less than a preset geometric deviation threshold.

Specifically, if the geometric deviation is less than or equal to the preset geometric deviation threshold, the geometric deviation is determined to be within tolerance; if the geometric deviation is greater than the preset geometric deviation threshold, the geometric deviation is determined to exceed the tolerance of the geometric deviation.

502, if the geometric deviation is within tolerance, determining the geometric error result including the geometric deviation, and determining a force error model type from the error models according to the stiffness from the acquired workpiece characteristic information and the stiffness from the acquired cutting tool information, and then calculating the force deviation based on the force error model type and the discrete interpolation values to determine whether the force deviation exceeds a tolerance of the force deviation.

If the electronic device determines that the geometric deviation is less than or equal to the preset geometric deviation threshold, it determines that the geometric deviation is within tolerance and determines the geometric error result including the geometric deviation to store the geometric deviation in the geometric error result. Then it determines the force error model type from the error models according to the stiffness from the acquired workpiece characteristic information and the stiffness from the acquired cutting tool information. Finally, it calculates the force deviation based on the force error model type and the discrete interpolation values, and determines whether the force deviation exceeds the tolerance of the force deviation by determining whether the force deviation is less than a preset force deviation threshold.

Specifically, if the force deviation is less than or equal to the preset force deviation threshold, the force deviation is determined to be within the tolerance of the force deviation; if the force deviation is greater than the preset force deviation threshold, the force deviation is determined to exceed the tolerance of the force deviation.

503, if the force deviation is within tolerance, determining the force error result including the force deviation, and calculating the thermal deviation according to the thermal error model of the error models and the discrete interpolation values to determine whether the thermal deviation exceeds a tolerance of the thermal deviation.

If the electronic device determines that the force deviation is less than or equal to the preset force deviation threshold, it determines that the force deviation is within tolerance and confirms the force error result including the force deviation to store the force deviation in the force error result, and calculates the thermal deviation according to the thermal error model of the error models and the discrete interpolation values, and determines whether the thermal deviation exceeds the tolerance of the thermal deviation by determining whether the thermal deviation is less than a preset thermal deviation threshold.

Specifically, if the thermal deviation is less than or equal to the preset thermal deviation threshold, the thermal deviation is determined to be within tolerance; if the thermal deviation is greater than the preset thermal deviation threshold, the thermal deviation is determined to exceed the tolerance of the thermal deviation.

504, if the thermal deviation is within tolerance, determining the thermal error result including the thermal deviation.

If the electronic device determines that the thermal deviation is less than the preset thermal deviation threshold, it determines that the thermal deviation is within tolerance and confirms the thermal deviation result including the thermal deviation to store the thermal deviation result in the thermal deviation result.

Since there are multiple discrete interpolation values, a plurality of geometric deviations, a plurality of force deviations and a plurality of thermal deviations are obtained correspondingly, and the number of the discrete interpolation values is equal to the number of the geometric deviations, the number of the force deviations and the number of the thermal deviations.

In some embodiments, a within-tolerance degree N is defined for determining whether a deviation is within tolerance. When N is greater than or equal to M (where M is a preset value within the domain [0, 100]), the deviation is determined to be within tolerance, where N is the ratio of the number of the discrete interpolation points with deviations within tolerance to the total number of the discrete interpolation points.

For example, when high accuracy is required for within-tolerance determination and a geometric within-tolerance degree, a force within-tolerance degree and a thermal within-tolerance degree are each set to 100, in the calculation of the respective within-tolerance degrees for the geometric deviation determination, the force deviation determination and the thermal deviation determination: in the calculation of the geometric within-tolerance degree, every geometric deviation is required to be less than or equal to the preset geometric deviation threshold to determine that the geometric deviation is within tolerance, that is, the number of the geometric deviations less than or equal to the preset geometric deviation threshold is equal to the total number of the discrete interpolation values; likewise, in the calculation of the force within-tolerance degree, every force deviation is required to be less than or equal to the preset force deviation threshold to determine that the force deviation is within tolerance, that is, the number of the force deviations less than or equal to the preset force deviation threshold is equal to the total number of the discrete interpolation values; likewise, in the calculation of the thermal within-tolerance degree, every thermal deviation is required to be less than or equal to the preset thermal deviation threshold to determine that the thermal deviation is within tolerance, that is, the number of the thermal deviations less than or equal to the preset thermal deviation threshold is equal to the total number of the discrete interpolation values. The total number of the discrete interpolation values in the geometric within-tolerance degree, the total number of the discrete interpolation values in the force within-tolerance degree and the total number of the discrete interpolation values in the thermal within-tolerance degree can be the same or different.

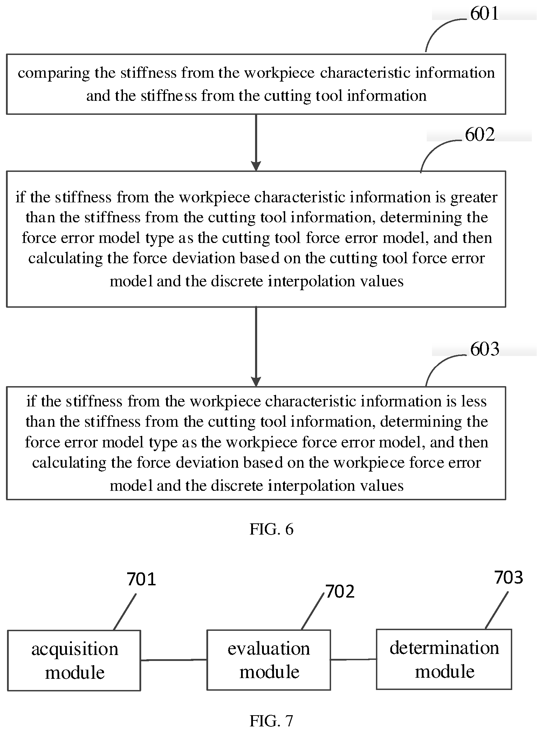

Please refer to FIG. 6, which further depicts step 502. Since there is a difference between the stiffness of the workpiece to be machined and the stiffness of the cutting tool, the determination of the force deviation needs to be made based on the specific difference between the two for accurate determination, including the following steps:
601, comparing the stiffness from the workpiece characteristic information and the stiffness from the cutting tool information.

After acquiring the stiffness from the workpiece characteristic information and the stiffness from the cutting tool information, the electronic device compares the stiffness of the workpiece to be machined with the stiffness of the cutting tool to obtain an optimal force error model. Specifically, if the comparison shows that the stiffness of the workpiece to be machined is greater than the stiffness of the cutting tool, the optimal force error model is determined to be the cutting tool force error model; if the comparison shows that the stiffness of the workpiece to be machined is less than the stiffness of the cutting tool, the optimal force error model is determined to be the workpiece force error model.

602, if the stiffness from the workpiece characteristic information is greater than the stiffness from the cutting tool information, determining the force error model type as the cutting tool force error model, and then calculating the force deviation based on the cutting tool force error model and the discrete interpolation values.

When the electronic device finds through comparison that the stiffness from the workpiece characteristic information is greater than the stiffness from the cutting tool information, it determines the force error model type as the cutting tool force error model, and then inputs the discrete interpolation values into the cutting tool force error model to calculate the force deviation. The cutting tool force error model of the digital twin system is established based on tool deformation information under force and workpiece information in an existing database as well as an end mill cutting force equation.

603, if the stiffness from the workpiece characteristic information is less than the stiffness from the cutting tool information, determining the force error model type as the workpiece force error model, and then calculating the force deviation based on the workpiece force error model and the discrete interpolation values.

When the electronic device determines through comparison that the stiffness from the workpiece characteristic information is less than the stiffness from the cutting tool information, it determines the force error model type as the workpiece force error model, and then inputs the discrete interpolation values into the workpiece force error model to calculate the force deviation. The workpiece force error model of the digital twin system is established based on finite element analysis methods, including but not limited to, static analysis, dynamic analysis, modal analysis, etc., combined with the workpiece information, fixture information, machine tool information and cutting tool information in an existing database.

In summary, compared with the prior art, the present application changes the single error evaluation on the workpiece to be machined to comprehensive error evaluation, thereby obtaining the comprehensive error evaluation result and improving the quality of error evaluation, which avoids inadequate machining due to a single error source in subsequent machining operations. Finally, whether to apply the first process set to machine the workpiece to be machined is determined based on the comprehensive error evaluation result, which avoids the problem of low labor efficiency caused by reliance on manual experience and realizes the automatic recommendation of the process sets.

In another aspect, the present application provides a computer program product including a computer program, when the computer program is executed by a processor, the method for recommending a process set based on comprehensive error evaluation according to any embodiment of the present application is implemented.

In the computer program product, an optional implementation form of a program module architecture of the computer program for realizing various steps of the method for recommending a process set based on comprehensive error evaluation may be a device for recommending a process set based on comprehensive error evaluation.

Please referring to FIG. 7, on the basis of the above method, the present application further provides a device for recommending a process set based on comprehensive error evaluation, error evaluation including:
An acquisition module 701 configured to acquire first information of the workpiece to be machined and generating the first process set based on the first information, wherein the first information includes the machining target information, workpiece characteristic information, position information and cutting tool information of the workpiece to be machined;
An evaluation module 702 configured to sequentially perform comprehensive error evaluation on the workpiece to be machined according to the first information to obtain the comprehensive error evaluation result, wherein the comprehensive error evaluation sequentially includes at least two of geometric error evaluation, force error evaluation and thermal error evaluation;
A determination module 703 configured to determine whether to apply the first process set to machine the workpiece to be machined according to the comprehensive error evaluation result.

In some embodiments, the process set recommendation device further includes a recording module 704 (not shown), configured to record the target process set and the first information of the workpiece to be machined to form empirical data after the target process set is determined to be applied to the workpiece to be machined.

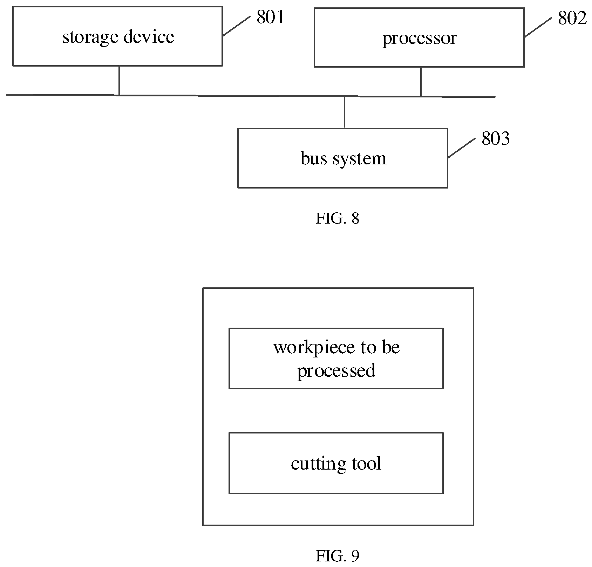

Referring to FIG. 8, the present application further provides a cloud device, including: a storage device 801, a processor 802 and a bus system 803. The storage device is configured to store programs; the processor is configured to execute the programs in the storage device, to carried out the method in any one of FIG. 1 and FIGS. 3 to 6.

The bus system is configured to connect the storage device and the processor to enable communication between the storage device and the processor.

The processor may be a Central Processing Unit (CPU), and may also be other general-purpose processors, Digital Signal Processors (DSP), Application Specific Integrated Circuits (ASIC), Field-Programmable Gate Arrays (FPGA) or other programmable logic devices, discrete gate or transistor logic devices, discrete hardware components and the like. The general-purpose processor may be a microprocessor or any conventional processor.

In some embodiments, the storage device 802 may be an internal storage unit of the cloud device, such as a hard disk or a memory of the cloud device. In other embodiments, the storage device 802 may also be an external storage device of the cloud device, such as a plug-in hard disk equipped on the cloud device, a Smart Media Card (SMC), a Secure Digital (SD) card, a Flash Card and the like. Further, the storage device may include both an internal storage unit and an external storage device of the cloud device. The storage device is configured to store an operating system, application programs, a BootLoader, data and other programs such as the program code of computer programs and the like. The storage device may also be used to temporarily store data that has been output or will be output.

The present application further provides a computer-readable storage medium including instructions that, when executed on a computer, enable the computer to execute the method in any one of FIG. 1 and FIGS. 3 to 6.

If the integrated unit is implemented in the form of a software functional unit and sold or used as an independent product, it may be stored in a computer-readable storage medium. Based on such understanding, all or part of the processes in the methods of the above embodiments of the present application may be completed by instructing the relevant hardware through a computer program that may be stored in a computer-readable storage medium. When the computer program is executed by a processor, the steps of the above various method embodiments may be implemented.

The computer program includes computer program codes, which may be in the form of source codes, object codes, executable files or some intermediate forms and the like. The computer-readable medium may at least include: any entity or device capable of carrying the computer program codes to a photographing device/terminal device, a recording medium, a computer memory, a Read-Only Memory (ROM), a Random Access Memory (RAM), an electrical carrier signal, a telecommunication signal and a software distribution medium, such as a USB flash drive, a mobile hard disk, a magnetic disk or an optical disc, etc.. In some jurisdictions, in accordance with legislation and patent practice, computer-readable medium may not include electrical carrier signals and telecommunication signals.

FIG. 9 illustrates a schematic block diagram of an application environment according to an embodiment of the present application. The application environment includes a workpiece to be machined and a cutting tool, and the cutting tool is used to machine the workpiece to be machined.

An embodiment of the present application further provides a computer-readable storage medium, which stores a computer program. When the computer program is executed by a processor, the method for recommending a process set based on comprehensive error evaluation according to any embodiment of the present application is implemented.

The embodiment of the present application provides a computer program product including a computer program. When the computer program is executed by a processor, the method for recommending a process set based on comprehensive error evaluation according to any embodiment of the present application is implemented.

The above are only embodiments of the present application, and do not limit the patent protection scope of the present application. Any equivalent structure or equivalent process transformation made by using the contents of the specification and accompanying drawings of the present application, or direct or indirect application in other relevant technical fields, shall be similarly included in the patent protection scope of the present application.

## Claims

1. A method for recommending a process set based on comprehensive error evaluation, **characterized in that**, the method comprises:
acquiring first information of a workpiece to be machined and generating a first process set based on the first information, wherein the first information includes machining target information, workpiece characteristic information, position information and cutting tool information of the workpiece to be machined;
sequentially performing comprehensive error evaluation on the workpiece to be machined according to the first information to obtain a comprehensive error evaluation result, wherein the comprehensive error evaluation sequentially includes at least two of geometric error evaluation, force error evaluation and thermal error evaluation;
determining whether to apply the first process set to machine the workpiece to be machined according to the comprehensive error evaluation result.

2. The method according to claim 1, **characterized in that**, after acquiring the process set for machining the workpiece to be machined according to the comprehensive error evaluation result, the method further comprises:
after determining the target process set to be applied to the workpiece to be machined, recording the target process set and the first information of the workpiece to be machined to form empirical data.

3. The method according to claim 1, **characterized in that** determining whether to apply the first process set to machine the workpiece to be machined according to the comprehensive error evaluation result comprises:
visualizing the comprehensive error evaluation result;
if a machining operation instruction input by an operator based on the visualized comprehensive error evaluation result is received, determining not to apply the first process set, and then determining a target process set for machining the workpiece to be machined according to the machining operation instruction; and
if no machining operation instruction input by the operator based on the visualized comprehensive error evaluation result is received, determining the first process set as the target process set for machining the workpiece to be machined.

4. The method according to any one of claims 1 to 3, **characterized in that** if the comprehensive error evaluation sequentially comprises the geometric error evaluation, the force error evaluation and the thermal error evaluation, performing comprehensive error evaluation on the workpiece to be machined according to the first information to obtain the comprehensive error evaluation result comprises:
acquiring discrete interpolation values of contour features of the workpiece to be machined according to the workpiece characteristic information;
sequentially performing the geometric error evaluation, the force error evaluation and the thermal error evaluation according to error models and the discrete interpolation values, as well as the workpiece characteristic information, the position information and the cutting tool information, to obtain a geometric error result including a geometric deviation, a force error result including a force deviation and a thermal error result including a thermal deviation;
coupling the geometric error result, the force error result and the thermal error result to obtain the comprehensive error evaluation result.

5. The method according to claim 4, **characterized in that**, coupling the geometric error result, the force error result and the thermal error result to form the comprehensive error evaluation result comprises:
acquiring the geometric deviation of the geometric error result, the force deviation of the force error result and the thermal deviation of the thermal error result;
superposing the geometric deviation, the force deviation and the thermal deviation to obtain a comprehensive deviation, so as to obtain the comprehensive error evaluation result including the comprehensive deviation.

6. The method according to claim 4, **characterized in that**, sequentially performing the geometric error evaluation, the force error evaluation and the thermal error evaluation according to error models and the discrete interpolation values, as well as the workpiece characteristic information, the placement position information and the cutting tool information, to obtain a geometric error result including a geometric deviation, a force error result including a force deviation and a thermal error result including a thermal deviation, comprises:
calculating the geometric deviation according to a geometric error model of the error models, the discrete interpolation values and the position information, and determining whether the geometric deviation exceeds a tolerance of the geometric deviation;
if the geometric deviation is within tolerance, determining the geometric error result including the geometric deviation, and determining a force error model type from the error models according to a stiffness from the workpiece characteristic information and a stiffness from the cutting tool information, and then calculating the force deviation based on the force error model type and the discrete interpolation values to determine whether the force deviation exceeds a tolerance of the force deviation;
if the force deviation is within tolerance, determining the force error result including the force deviation, and calculating the thermal deviation according to a thermal error model of the error models and the discrete interpolation values to determine whether the thermal deviation exceeds a tolerance of the thermal deviation;
if the thermal deviation is within tolerance, determining the thermal error result including the thermal deviation.

7. The method according to claim 5 or 6, **characterized in that**, determining a force error model type from the error models according to a stiffness from the workpiece characteristic information and a stiffness from the cutting tool information, and then calculating the force deviation based on the force error model type and the discrete interpolation values to determine whether the force deviation exceeds a tolerance of the force deviation, comprises:
comparing the rigidity acquired from the workpiece characteristic information and a rigidity acquired from the cutting tool information;
if the stiffness from the workpiece characteristic information is greater than the stiffness from the cutting tool information, determining the force error model type as a cutting tool force error model, and then calculating the force deviation based on the cutting tool force error model and the discrete interpolation values;
if the stiffness from the workpiece characteristic information is less than the stiffness from the cutting tool information, determining the force error model type as a workpiece force error model, and then calculating the force deviation based on the workpiece force error model and the discrete interpolation values.

8. A device for recommending a process set based on comprehensive error evaluation, **characterized in that**, the device comprises:
an acquisition module configured to acquire first information of a workpiece to be machined and generate a first process set based on the first information, wherein the first information includes machining target information, workpiece characteristic information, position information and cutting tool information of the workpiece to be machined;
an evaluation module configured to sequentially perform comprehensive error evaluation on the workpiece to be machined according to the first information to obtain a comprehensive error evaluation result, wherein the comprehensive error evaluation sequentially includes at least two of geometric error evaluation, force error evaluation and thermal error evaluation;
a determination module configured to determine whether to apply the first process set to machine the workpiece to be machined according to the comprehensive error evaluation result.

9. A computer numerical control machine tool, **characterized in that**, the computer numerical control machine tool comprises: a storage device, a processor and a bus system;
wherein the storage device is configured to store a program;
wherein the processor is configured to execute the program in the storage device to execute the method according to any one of claims 1 to 8;
wherein the bus system is configured to connect the storage device and the processor to enable communication between the storage device and the processor.

10. A computer-readable storage medium containing instructions, **characterized in that** the instructions, when executed on a computer, enable the computer to execute the method according to any one of claims 1 to 8.

11. An electronic device, **characterized in that**, the electronic device comprises:
an acquisition module configured to acquire first information of a workpiece to be machined and generate a first process set based on the first information, wherein the first information includes machining target information, workpiece characteristic information, position information and cutting tool information of the workpiece to be machined;
an evaluation module configured to obtain a comprehensive error evaluation result by sequentially performing comprehensive error evaluation on the workpiece to be machined according to the first information, wherein the comprehensive error evaluation sequentially includes at least two of geometric error evaluation, force error evaluation and thermal error evaluation;
a determination module configured to determine whether to apply the first process set to machine the workpiece to be machined according to the comprehensive error evaluation result.

12. An electronic device, comprising a storage device, a processor and a computer program stored in the storage device and executable by the processor, **characterized in that**, the processor is configured to execute the computer program to implement the method for recommending a process set based on comprehensive error evaluation according to any one of claims 1 to 8.

13. A computer program product, comprising a computer program, **characterized in that** the computer program, when executed by a processor, implements a method for recommending a process set based on comprehensive error evaluation according to any one of claims 1 to 8.
